(19) Europäisches Patentamt
European Patent Office
Office européen des brevets

(11) Publication number: 0 145 368
B1

(12) # EUROPEAN PATENT SPECIFICATION

(45) Date of publication of patent specification: 08.03.89

(51) Int. Cl.⁴: C 08 F 297/08

(21) Application number: 84308054.0

(22) Date of filing: 21.11.84

(54) **Process for producing propylene block copolymers.**

(30) Priority: 29.11.83 JP 223248/83

(43) Date of publication of application:
19.06.85 Bulletin 85/25

(45) Publication of the grant of the patent:
08.03.89 Bulletin 89/10

(84) Designated Contracting States:
BE DE FR GB NL

(56) References cited:
EP-A-0 086 300
US-A-4 396 534
US-A-4 398 006

(73) Proprietor: TOA NENRYO KOGYO KABUSHIKI KAISHA
1-1 Hitotsubashi, 1-Chome Chiyoda-Ku
Tokyo 100 (JP)

(72) Inventor: Fujita, Masahito
1902-5 Ooaza Kamekubo
Ooi-machi Iruma-gun Saitama-ken (JP)
Inventor: Kizaki, Masami
384-1, Ooaza Nakafukuoka
Kamifukuoka-shi Saitama-ken (JP)
Inventor: Nagashima, Yukio
1902-5 Ooaza Kamekubo
Ooi-machi Iruma-gun Saitama-ken (JP)
Inventor: Miyazaki, Makoto
4-3, Yanagi-cho
Sakado-shi Saitama-ken (JP)
Inventor: Shinbori, Yuichi
8-5 Chuo 1-chome
Nishi-ku Yokohama-shi Kanagawa-ken (JP)
Inventor: Inaba, Naomi
894-2-1-401, Ooaza Kozutsumi
Kawagoe-shi Saitama-ken (JP)

(74) Representative: Northover, Robert Frank et al
ESSO Chemical Limited Esso Chemical Research Centre P.O. Box 1
Abingdon Oxfordshire, OX13 6BB (GB)

EP 0 145 368 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the invention

The present invention relates to a process for producing propylene block copolymers.

Background of the invention

There is known a process for producing propylene block copolymers by homopolymerizing propylene or copolymerizing propylene with a small amount of olefins to give a stereoregular polymer of propylene by using a solid catalyst component composed essentially of magnesium, titanium, halogen, and an electron donor compound, and subsequently copolymerizing ethylene and alpha-olefin in the presence of said catalyst component and said polymer.

This process is intended to produce crystalline polypropylene having improved properties, such as the balanced stiffness and impact resistance and the high flowability required for good moldability.

From the standpoint of balanced stiffness and impact resistance, it is necessary that the propylene (co)polymer produced in the first step should have a high stereoregularity and the copolymer produced in the second step should contain ethylene in large amounts.

This process requires at least two steps and the polymerization time is inevitably long. Therefore, the polymerization catalyst used in this process is required to keep its activity for a long time.

Recently, it has become possible to extremely reduce the formation of waxlike polymer and the content of ash in the polymer by using a highly active and highly stereoregular catalyst. This leads to a new process for producing polypropylene without the deashing step. However, the conventional polymerization catalyst exhibits a high activity in the stereoregular polymerization of propylene, whereas it does not keep the activity for a long time. Thus its activity is low when propylene block copolymers are produced, and it does not provide in high yields the copolymers containing ethylene in large amounts.

There have been proposed some methods for increasing the yields of the copolymers of high ethylene content. According to one method, the polymerization time is shortened and the activity of the polymerization catalyst is suppressed in the first step so that the yields of the copolymer in the second step is increased relatively. According to the other method, an organoaluminium compound is added during copolymerization in the second step so that the activity of the polymerization catalyst is increased (CA 1164129). The former method causes a quality problem because the catalytic activity as a whole decreases and consequently the ash content in the polymer increases. The latter method is not necessarily advantageous, because the quantity of aluminium residues in the polymer increases and it is difficult to disperse an organoaluminium compound uniformly in the reaction system. Moreover, the activity for copolymerization of the catalyst is not increased infinitely.

EP 86300 discloses a two step propylene block copolymerization process. The catalyst includes a solid titanium catalyst consisting essentially of titanium, magnesium, halogen and an electrondonor, an organoaluminium compound and an organic silicon compound having an Si—O—C bond or an Si—N—C bond.

Disclosure of the invention

Object of the invention

It is an object of this invention to provide a process for producing in two steps a propylene block copolymer which has balanced stiffness and impact resistance and has high flowability. In the first step, a propylene (co)polymer having a high stereoregularity is produced, and in the second step, a propylene block copolymer of high ethylene content is produced in high yields.

In Japanese Patent Laid-open No. 198503/1983, there is disclosed a catalyst component obtained by contacting a magnesium alkoxide, a silicon compound having the hydrogen-silicon bond, an electron donor compound, and a titanium compound with one another, said catalyst component exhibiting high performance for olefin polymerization. It has been discovered that the objects of this invention can be achieved by the block copolymerization of propylene and other olefin in a process employing a combination of the above-mentioned catalyst component with an organic compound of a metal of Group I to III in the Periodic Table and an organosilicon compound.

Summary of the invention

The gist of the invention resides in a process for producing propylene block copolymers which comprises the steps of

(a) polymerizing propylene in the presence of a catalyst to give a crystalline propylene polymer, and

(b) copolymerizing ethylene and at least one alpha-olefin in the presence of said catalyst and said polymer, said catalyst being composed of

(A) a catalyst component obtained by contacting

1) a magnesium alkoxide,

2) a silane compound having a hydrogen-silicon bond,

3) an electron donor compound, and

4) a titanium compound with one another,

(B) an organic compound of a metal in Group I to III of the Periodic Table, and

(C) an organosilicon compound represented by the formula $R_pSiX_m(OR')_n$, wherein R and R′ are the same or different $C_{1-20}$ hydrocarbon groups, X is a halogen atom, $0 \le p < 4$, $0 \le m < 4$, $0 < n \le 4$, and $p+m+n=4$.

The catalyst component

The raw materials used for the preparation of the catalyst component in this invention are described below.

(A)1 Magnesium alkoxide

The magnesium alkoxide used in this invention is one which is represented by the formula Mg(OR″)(OR‴), where R″ and R‴ are alkyl, alkenyl, cycloalkyl, aryl, or aralkyl groups having 1 to 20 carbon atoms, preferably 1 to 10 carbon atoms, and R and R′ may be the same or different.

These compounds include, for example,

$Mg(OCH_3)_2$, $Mg(OC_2H_5)_2$, $Mg(OCH_3)(OC_2H_5)$, $Mg(Oi\text{-}C_3H_7)_2$, $Mg(OC_3H_7)_2$, $Mg(OC_4H_9)_2$, $Mg(Oi\text{-}C_4H_9)_2$, $Mg(OC_4H_9)(Oi\text{-}C_4H_9)$, $Mg(OC_4H_9)(Osec\text{-}C_4H_9)$, $Mg(OC_6H_{13})_2$, $Mg(OC_8H_{17})_2$, $Mg(OC_6H_{11})_2$, $Mg(OC_6H_5)_2$, $Mg(OC_6H_4CH_3)_2$, and $Mg(OCH_2C_6H_5)_2$.

These magnesium alkoxides should preferably be dried before use, and more preferably be dried with heating under reduced pressure. They may be readily obtained commercially or may be synthesized by the known method.

Prior to use, the magnesium alkoxides may be preliminarily contacted with an inorganic or organic inert solid substance.

Suitable examples of the inorganic solid substance include metal sulfate, metal hydroxide, metal carbonate, metal phosphate, and metal silicate, such as $Mg(OH)_2$, $BaCO_3$, and $Ca_3(PO_4)_2$.

Suitable examples of the organic solid substance include low-molecular weight compounds such as durene, anthracene, naphthalene, diphenyl, and other aromatic hydrocarbons, and also high-molecular weight compounds such as polyethylene, polypropylene, polyvinyltoluene, polystyrene, polymethyl methacrylate, polyamide, polyester, and polyvinyl chloride.

(A)2 Silane

Any silicon compound having the hydrogen-silicon bond can be used in this invention. It is represented by the formula $H_sR^2_tSiX'_r$ where $R^2$ is a hydrocarbon group, $R^3O$— ($R^3$=hydrocarbon group), $R^4R^5N$— ($R^4$ and $R^5$=hydrocarbon groups), or $R^6COO$— ($R^6$=hydrogen atom or hydrocarbon group); X′ is a halogen atom; s is 1 to 3; $0 \le r < 4$, and $s+t+r=4$. The groups represented by $R^2$ may be the same or different when t is greater than 1.

The hydrocarbon groups represented by $R^2$, $R^3$, $R^4$, $R^5$, and $R^6$ include, for example, alkyl, alkenyl, cycloalkyl, aryl, and aralkyl of carbon number 1 to 16. The alkyl group includes methyl, ethyl, propyl, n-butyl, isobutyl, n-hexyl, n-octyl, 2-ethylhexyl, and n-decyl. The alkenyl group includes vinyl, allyl, isopropenyl, propenyl, and butenyl. The cycloalkyl group includes cyclopentyl and cyclohexyl. The aryl group includes phenyl, tolyl, and xylyl. The aralkyl group includes benzyl, phenetyl, and phenylpropyl.

Preferably among them are lower alkyl groups such as methyl, ethyl, propyl, isopropyl, n-butyl, isobutyl, and t-butyl, and aryl groups such as phenyl and tolyl.

X′ in the above formula denotes a halogen atom such as chlorine, bromine, and iodine. Preferable among them is chlorine.

Examples of the silicon compound include:

$HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl$, $H_2(n\text{-}C_4H_9)SiCl$, $H_2(C_6H_4CH_3)SiCl$, $HSi(CH_3)_3$, $HSiCH_3(OCH_3)_2$, $HSiCH_3(OC_2H_5)_2$, $HSi(OCH_3)_3$, $(C_2H_5)_2SiH_2$, $HSi(CH_3)_2(OC_2H_5)$, $HSi(CH_3)_2[N(CH_3)_2]$, $HSiCH_3(C_2H_5)_2$, $HSiC_2H_5(OC_2H_5)_2$, $HSiCH_3[N(CH_3)_2]_2$, $C_6H_5SiH_3$, $HSi(C_2H_5)_3$, $HSi(OC_2H_5)_3$, $HSi(CH_3)_2[N(C_2H_5)_2]$, $HSi[N(CH_3)_2]_3$, $C_6H_5CH_3SiH_2$, $C_6H_5(CH_3)_2SiH$, $(n\text{-}C_3H_7)_3SiH$, $HSiCl(C_6H_5)_2$, $H_2Si(C_6H_5)_2$, $HSi(C_6H_5)_2CH_3$, $(n\text{-}C_5H_{11}O)SiH$, $HSi(C_6H_5)_3$, and $(n\text{-}C_5H_{11})_3SiH$.

Additional compounds include:

$(ClCH_2CH_2O)_2CH_3SiH$, $HSi(OCH_2CH_2Cl)_3$, $[H(CH_3)_2Si]_2O$, $[H(CH_3)_2Si]_2NH$, $(CH_3)_3SiOSi(CH_3)_2H$, $[H(CH_3)_2Si]_2C_6H_4$, $[(CH_3)_3SiO]_3SiH$, and $\overline{[Si(CH_3)(H)O]_5}$.

Preferable among them are those silicon halide compound in which R is a hydrocarbon, t is 0 to 2, and r is 1 to 3, as exemplified by:

$HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl$, $H_2(n\text{-}C_4H_9)SiCl$, $H_2(C_6H_4CH_3)SiCl$, and $HSiCl(C_6H_5)_2$.

Most suitable among them are $HSiCl_3$, $HCH_3SiCl_2$, $H(CH_3)_2SiCl$ and especially $HSiCl_3$.

(A)3 Electron donor compound

The electron donor compound used in this invention includes carboxylic acids, carboxylic acids anhydrides, carboxylate esters, carboxylic acid halides, alcohols, ethers, ketones, amines, amides, nitriles,

aldehydes, alcoholates, phosphoamides, thioethers, thioesters, carbonate esters, and compounds of phosphorus, arsenic, or antimony attached to an organic group through a carbon or oxygen atom. Preferable among them are carboxylic acids, carboxylic acid anhydrides, carboxylate esters, halogenated carboxylic acids, alcohols, and ethers.

Examples of the carboxylic acids include aliphatic monocarboxylic acids such as formic acid, acetic acid, propionic acid, butyric acid, isobutyric acid, valeric acid, caproic acid, pivalic acid, acrylic acid, methacrylic acid, and crotonic acid; aliphatic dicarboxylic acids such as malonic acid, succinic acid, glutaric acid, adipic acid, sebacic acid, maleic acid, and fumaric acid; aliphatic oxycarboxylic acids such as tartaric acid; alicyclic carboxylic acids such as cyclohexane monocarboxylic acid, cyclohexene monocarboxylic acid, cis - 1,2 - cyclohexane dicarboxylic acid, and cis - 4 - methylcyclohexene - 1,2 - dicarboxylic acid; aromatic monocarboxylic acids such as benzoic acid, toluic acid, anisic acid, p - t - butylbenzoic acid, naphthoic acid, and cinnamic acid; and aromatic dicarboxylic acids such as phthalic, acid, isophthalic acid, terephthalic acid, and naphthalic acid.

The carboxylic acid anhydrides are the acid anhydrides of the above-mentioned carboxylic acids.

The carboxylate esters that can be used are mono-or diesters of the above-mentioned carboxylic acids. Examples of the carboxylate esters include butyl format, ethyl acetate, butyl acetate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexane carboxylate, methyl benzoate, ethyl benzoate, methyl p-toluate, ethyl p - t - butylbenzoate, ethyl p-anisate, ethyl alpha - naphthoate, isobutyl alpha - naphthoate, ethyl cinnamate, monomethyl phthalate, dibutyl phthalate, diisobutyl phthalate, dihexyl phthalate, dioctyl phthalate, di - 2 - ethylhexyl phthalate, diallyl phthalate, diphenyl phthalate, diethyl isophthalate, isobutyl isophthalate, diethyl terephthalate, dibutyl terephthalate, diethyl naphthalate, and dibutyl naphthalate.

The carboxylic acid halides that can be used are acid halides of the above-mentioned carboxylic acids. Their examples include acetic acid chloride, acetic acid bromide, acetic acid iodide, propionic acid chloride, butyric acid chloride, butyric acid bromide, butyric acid iodide, pivalic acid chloride, pivalic acid bromide, acrylic acid chloride, acrylic acid bromide, acrylic acid iodide, methacrylic acid chloride, methacrylic acid bromide, methacrylic acid iodide, crotonic acid chloride, malonic acid chloride, malonic acid bromide, succinic acid chloride, succinic acid bromide, glutaric acid chloride, glutaric acid bromide, adipic acid chloride, adipic acid bromide, sebacic acid chloride, sebacic acid bromide, maleic acid chloride, maleic acid bromide, fumaric acid chloride, fumaric acid bromide, tartaric acid chloride, tartaric acid bromide, cyclohexanecarboxylic acid chloride, chclohexanecarboxylic acid bromide, 1 - cyclohexenecarboxylic acid chloride, cis - 4 - methylcyclohexenecarboxylic acid chloride, cis - 4 - methylcyclohexenecarboxylic acid bromide, benzoyl chloride, benzoyl bromide, p-toluic acid chloride, p-toluic acid bromide, p-anisic acid chloride, p-anisic acid bromide, alpha-naphthoic acid chloride, cinnamic acid chloride, cinnamic acid bromide, phthalic acid dichloride, phthalic acid dibromide, isophthalic acid dichloride, isophthalic acid dibromide, terephthalic acid dichloride, and naphthanlic acid dichloride. Additional examples include dicarboxylic acid monoalkylhalides such as adipic acid monomethylchloride, maleic acid monoethylchloride, and maleic acid monomethylchloride.

The alcohols are represented by the formula $R^7OH$, where $R^8$ is an alkyl, alkenyl, cycloalkyl, aryl, or aralkyl group of carbon number 1 to 12. Examples of the alcohols include methanol, ethanol, propanol, isopropanol, butanol, isobutanol, pentanol, hexanol, octanol, 2 - ethylhexanol, cyclohexanol, benzyl alcohol and allyl alcohol, phenol, cresol, xylenol, ethylphenol, isopropylphenol, p - t - butylphenol, and n - octylphenol.

The ethers are represented by the formula $R^8OR^9$, where $R^8$ and $R^9$ are alkyl, alkenyl, cycloalkyl, aryl, or aralkyl groups of carbon number 1 to 12, and $R^8$ and $R^9$ may be the same or different. Their examples include diethyl ether, diisopropyl ether, dibutyl ether, diisobutyl ether, diisoamyl ether, di - 2 - ethylhexyl ether, diallyl ether, ethylallyl ether, butylallyl ether, diphenyl ether, anisole, and ethylphenyl ether.

(A)4 Titanium compound

The titanium compound used in this invention is a compound of divalent, trivalent, or tetravalent titanium. Examples of these compounds include titanium tetrachloride, titanium tetrabromide, trichloroethoxytitanium, trichlorobutoxytitanium, dichlorodiethoxytitanium, dichlorodibutoxytitanium, dichlorodiphenoxytitanium, chlorotriethoxytitanium, chlorotributoxytitanium, tetrabutoxytitanium, and titanium trichloride. Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

Preparation of catalyst component

The catalyst component used in this invention is obtained by contacting a magnesium alkoxide (component (A)1), a silicon compound having the hydrogen-silicon bond (component (A)2), an electron donor compound (component (A)3) and a titanium compound (component (A)4) with one another. The

contacting of the four components can be accomplished by (1) contacting component (A)1 and component (A)2 with each other, contacting the resulting contact product with component (A)3, and finally contacting the resulting contact product with component (A)4, (2) contacting components (A)1, (A)2, and (A)3 with one another simultaneously and then contacting the resulting contact product with component (A)4, or (3) contacting the four components with one another simultaneously. Methods (1) and (2) are preferable and method (1) is most suitable. Methods (1) and (2) are described below.

Method (1)

[1] Reaction of magnesium alkoxide with silicon compound

The reaction of a magnesium alkoxide (component (A)1) with a silicon compound (component (A)2) is accomplished by contacting them with each other. The reaction should preferably be accomplished by mixing and stirring them in the presence of a hydrocarbon.

The preferred hydrocarbon is a saturated aliphatic, saturated alicyclic, and aromatic hydrocarbon of carbon number 6 to 12 such as hexane, heptane, octane, cyclohexane, benzene, toluene, and xylene.

One mol of component (A)1 is contacted with 0.5 to 10 mol, preferably 1 to 5 mol, of component (A)2. The contacting is carried out at 0 to 200°C for 0.5 to 100 hours. Either component (A)1 and component (A)2 may contain more than one kind of compound.

The hydrocarbon may be used in any amount; but preferably, an amount less than 100 ml should be used for 1 g of component (A)1.

In the case where a silicon halide is used as component (A)2, a gas will evolve upon contact with component (A)1, indicating that the reaction is proceeding. The composition of the gas and the analysis of the reaction product indicates that the reaction forms a compound containing the silicon atom, said compound being insoluble in an inert solvent, particularly n-hexane or n-heptane, at 65°C.

The contact product of component (A)1 and component (A)2 is separated from the reaction system and used for the subsequent contacting. It may be washed with an inert hydrocarbon like the one used in the contacting of component (A)1 and component (A)2. The washing may be carried out with heating.

[2] Contacting with electron donor compound

The reaction product obtained in the above step [1] is then contacted with an electron donor compound (component (A)3). The contacting is accomplished by mixing and stirring them together or by mechanically copulverizing them in the presence or absence of an inert hydrocarbon. The preferred hydrocarbons are hexane, heptane, octane, cyclohexane, benzene, toluene, and xylene.

The contacting by mechanical copulverizing is carried out at 0 to 100°C for 0.1 to 100 hours. The contacting by mere stirring is carried out at 0 to 150°C for 0.5 to 10 hours.

Component (A)3 should preferably be used in an amount of 0.005 to 10 gram mol, preferably 0.01 to 1 gram mol, for 1 gram atom of magnesium in the contact product of magnesium alkoxide and silicon compound.

[3] Contacting with titanium compound

The contact product obtained in the above step [2] (designated as contact product 1) is subsequently contacted with a titanium compound (component (A)4). The contact product 1 may be washed with a proper cleaning agent such as the above-mentioned inert hydrocarbon before it is contacted with component (A)4.

The contacting of contact product 1 and component (A)4 may be achieved by simply bringing them into contact with each other; but it is preferable to mix and stir both of them in the presence of a hydrocarbon such as hexane, heptane, octane, cyclohexane, benzene, toluene, and xylene.

Component (A)4 should be used in an amount of 0.1 gram mol or above, preferably 1 to 50 gram mol, for 1 gram atom of magnesium in the contact product 1.

The contacting in the presence of a hydrocarbon should be carried out at 0 to 200°C for 0.5 to 20 hours, preferably at 60 to 150°C for 1 to 5 hours.

The contacting with component (A)4 should preferably be performed more than once. The second contact may be performed in the same way as mentioned above; but, in the case where the first contact is performed in the presence of a hydrocarbon, the second contact should preferably be performed after the separation of the hydrocarbon.

Method (2)

[1] Contacting of magnesium alkoxide, silicon compound, and electron donor compound

A magnesium alkoxide (component (A)1), a silicon compound (component (A)2), and an electron donor compound (component (A)3) may be contacted with one another simultaneously. This contacting should preferably be performed by mixing and stirring in the presence of an inert hydrocarbon such as hexane, heptane, octane, cyclohexane, benzene, toluene, and xylene. Contacting by mechanical copulverizing may also be employed.

The contacting of components (A)1—3 should be performed in the ratio of 1 mol of component (A)1 0.5 to 10 mol, preferably 1 to 5 mol, of component (A)2, and 0.005 to 10 mol, preferably 0.05 to 1 mol, of

component (A)3. The contacting of the three components is performed at 0 to 200°C for 0.1 to 100 hours. Each component may contain more than one kind of compound.

The hydrocarbon may be used in any amount; but it is usually 100 ml or less for 1 g of component (A)1. The contact product of the three components is used for the subsequent contacting after separation, or without separation, from the reaction system. Prior to the subsequent contacting, the contact product may be washed, as required, with such an inert hydrocarbon as used in the contacting of the three components. Washing may be performed with heating.

[2] Contacting with titanium compound

The contact product obtained in the above step [1] is then contacted with a titanium compound (component (A)4). This contacting is accomplished in the same way as mentioned in step [3] of method (1).

The solid product obtained in the above method (1) or (2) is washed, as required, with an inert hydrocarbon such as hexane, heptane, octane, cyclohexane, benzene, toluene, and xylene, followed by drying. Thus there is obtained the catalyst component used in this invention.

Catalyst for block polymerization

The catalyst component obtained as mentioned above is made into the polymerization catalyst used in this invention by combining it with a cocatalyst comprising an organic compound of Group I—III metals and an organosilicon compound.

Organic compound of group I—III metals

According to this invention, an organic compound of lithium, magnesium, calcium, zinc, or aluminum can be used. The preferred organometallic one is an organoaluminium compound represented by the formula $R_w^{10}AlX'''_{3-w}$, where $R^{10}$ is an alkyl or aryl group; X''' is a halogen atom, alkoxyl group, or hydrogen atom; and w is any number in the range of $1 \leq w \leq 3$. Preferred organoaluminum compounds are alkyl aluminum compounds and a mixture thereof or complex thereof having 1 to 18 carbon atoms, preferably 2 to 6 carbon atoms, such as trialkyl aluminium, dialkyl aluminium monohalide, monoalkyl aluminium dihalide, alkyl aluminum sesquihalide, dialkyl aluminum monoalkoxide, and dialkyl aluminum monohydride. Examples of such compounds include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among them are trialkyl aluminums, and most suitable among them are triethyl aluminum and triisobutyl aluminum. These trialkyl aluminums may be used in combination with other organoaluminum compounds such as commercially available diethyl aluminum chloride, ethyl aluminum dichloride, ethyl aluminum sesquichloride, diethyl aluminum ethoxide, or diethyl aluminum hydride, or a mixture or a complex thereof.

According to this invention, it is also possible to use an organoaluminum compound in which two or more aluminum atoms are bonded through an oxygen atom or a nitrogen atom. Examples of such compounds include those which are represented by the formulas

$$(C_2H_5)_2AlOAl(C_2H_5)_2,\ (C_4H_9)_2AlOAl(C_4H_9)_2,\ \text{and}\ (C_2H_5)_2AlC_2H_5NAl(C_2H_5)_2.$$

Organic compounds of other metals than aluminum include, for example, diethyl magnesium, ethyl magnesium chloride, diethyl zinc, $LiAl(C_2H_5)_4$, and $LiAl(C_7H_{15})_4$.

The organometal compound is used in an amount of 1 to 2000 gram mol, preferably 10 to 700 gram mol, for 1 gram atom of titanium in the catalyst component.

Organosilicon compound

The organosilicon compound used as one component of the polymerization catalyst is one which is represented by the formula $R_pSiX_m(OR')_n$, where $R_p$ and R' are the same or different $C_1$ to $C_{20}$ hydrocarbon groups, X is a halogen atom, $0 \leq p < 4$, $0 \leq m < 4$, $0 \leq n \leq 4$, and $p+m+n=4$. The hydrocarbon groups include alkyl, alkenyl, cycloalkyl, aryl, and aralkyl groups. If p is 2 or above, R may denote hydrocarbon groups of different kind. The halogen atom represented by X should preferably be a chlorine atom.

Examples of the organosilicon compound include tetramethoxysilane, tetraethoxysilane, tetrabutoxysilane, tetraisobutoxysilane, tetraphenoxysilane, tetra(p - methylphenoxy)silane, tetrabenzyloxysilane, methyltrimethoxysilane, methyltriethoxysilane, methyltributoxysilane, methyltriphenoxysilane, ethyltriethoxysilane, ethyltriisobutoxysilane, ethyltriphenoxysilane, butyltrimethoxysilane, butyltriethoxysilane, butyltributoxysilane, butyltriphenoxysilane, isobutyltriisobutoxysilane, vinyltriethoxysilane, allyl-

trimethoxysilane, phenyltrimethoxysilane, phenyltriethoxysilane, benzyltriphenoxysilane, methyltriallyloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diallyldipropoxysilane, diphenyldiallyloxysilane, methylphenyldimethoxysilane, phenyltrimethoxysilane, phenyltriethoxysilane, diphenyldimethoxysilane, methylphenyldimethoxysilane, and chlorophenyldiethoxysilane.

The silicon compound is used in an amount of 0.02 to 2.0 gram mol, preferably 0.05 to 0.8 gram mol, for 1 gram atom of metal in the organometallic compound.

The silicon compounds of more than one kind may be used in combination with one another. It also may be combined with an electron donor compound to give a polymer which is improved in stereoregularity. The electron donor compound used for this purpose may be any one which is used for the preparation of the catalyst component used in this invention. The preferred ones are carboxylate esters, alcohols, ethers, and ketones. The electron donor compound is used in an amount of 0.005 to 1.0 gram mol, preferably 0.01 to 0.5 gram mol, for 1 gram atom of metal in the organometallic compound.

The silicon compound and the electron donor compound which is used as required may be combined with the organometallic compound and the catalyst component simultaneously or may be used after being previously contacted with the organometallic compound.

Process for copolymerization

According to the process of this invention, copolymerization is accomplished in two steps. In the first step, propylene is polymerized into crystalline polypropylene in the presence of the above-mentioned polymerization catalyst. In the second step, a random block copolymer with crystalline ethylene polymer and amorphous ethylene-alpha-olefin in copolymer is formed by polymerizing ethylene and alpha-olefin in the presence of said polymerization catalyst and said polypropylene.

The crystalline polypropylene obtained in the first step should preferably be one having a high stereoregularity so that the final block copolymer has balanced stiffness and impact resistance. Its crystallinity should be such that the insoluble matter in boiling n-heptane is higher than 93%, preferably higher than 95%. In the first step, propylene may be incorporated with a small amount of other olefin for random copolymerization. The olefins that can be used for this purpose include ethylene or alpha-olefin of carbon number 4 to 8 such as 1-butene, 4-methyl-1-pentene, 1-hexene, and 1-octene. If the amount of other olefins copolymerized increases, the resulting polypropylene decreases in crystallinity and hence in stiffness. It should be less than about 1 wt% for ethylene and less than about 5 wt% for 1-butene. In addition, the polypropylene in the first step should have a melting point higher than 155°C.

The alpha-olefin which is used for copolymerization in the second step includes alpha-olefin of carbon number 3 to 8 such as propylene, 1-butene, 4-methyl-1-pentene, 1-hexene, and 1-octene. Among them, propylene is practical from the standpoint of copolymerization rate and economy. In order for the block copolymer to exhibit the characteristic features of physical properties, it is possible to use an alpha-olefin other than propylene or to use more than one kind of alpha-olefin.

The content of ethylene in the copolymer obtained in the second step and the content of the copolymer obtained in the second step in the total block copolymer may be established as desired. From the standpoint of balanced stiffness and impact resistance, the content of ethylene should preferably be 25 to 95 wt%, and the content of copolymer should preferably be 3 to 35 wt%.

The process of this invention may be modified to improve the block copolymer in moldability and mechanical properties. For example, the polymerization in the first step may be carried out in multiple stages and a molecular weight modifier is used in each stage to broaden the molecular weight distribution of the polymer. The copolymerization in the second step may also be carried out in multiple stages so that the range of molecular weight and ethylene content of the polymer is broadened by discharging hydrogen which is commonly used as the molecular weight modifier. It is also possible to use a molecular weight modifier other than hydrogen.

The propylene block copolymer may be produced in three ways mentioned below.

(a) Polymerization in both the first step and the second step is carried out by slurry polymerization in a hydrocarbon solvent.

(b) Polymerization in both the first step and the second step is carried out by bulk polymerization in the liquid monomer.

(c) Polymerization in the first step is carried out by bulk polymerization and the unreacted monomer (propylene) is discharged, and polymerization in the second step is carried out in gas phase by using a fluidized bed or stirred bed reactor.

The last two methods (non-solvent process) are economically advantageous in the case of the so-called non-deashing process in which it is not necessary to remove ash from the copolymer because of the high catalytic activity. According to the process of this invention, it is possible to produce the copolymer by the non-deashing process because the catalyst has a high activity.

The solvent used in slurry polymerization is a hydrocarbon such as n-butane, isobutane, n-pentane, isopentane, hexane, heptane, octane, cyclohexane, benzene, toluene, and xylene.

Polymerization in the first step and the second step is carried out at −80°C to +150°C, preferably 40 to 120°C, under normal pressure or under pressure.

Effect of invention

The process of this invention provides in high yields polypropylene having a high stereoregularity and ethylene - alpha - olefin copolymer of high ethylene content which are essential for the propylene block copolymer having the balanced stiffness and impact resistance. Since the polymerization catalyst in this invention keeps its high activity for a long time, the process of this invention can be applied to the above-mentioned third method (c), by which bulk polymerization is carried out in the first step and gas phase polymerization is carried out in the second step. Thus the process of this invention provides quality block copolymer economically.

The catalyst used in the process of this invention is advantageous in that it provides block copolymers having a higher melt index as compared with the conventional catalyst under the same partial pressure of hydrogen used as the molecular weight modifier. Thus the process of this invention is superior from the view point of producing high flow propylene block copolymers.

Examples

The invention is described in more detail, though only by way of illustration, with reference to the following examples.

Percent (%) in the examples means wt%, unless otherwise indicated.

The heptane insolubles (abbreviated as H.I.) that indicates the ratio of crystalline fraction in the polymer is the quantity of polymer than remains undissolved when extracted with boiling n-heptane for 6 hours by using a Soxhlet extractor of improved type. The melt flow rate (MFR) was measured according to ASTM D-1238, and the bulk density was measured according to ASTM D-1895-69.

Example 1

Preparation of catalyst component

Into a 500-ml glass reactor equipped with a reflux condenser, dropping funnel, and stirrer, with the atmosphere replaced with nitrogen, were charged 35 g (0.31 mol) of commercial magnesium diethoxide and 100 ml of n-heptane. While stirring at room temperature, a mixture of 104 g (0.77 mol) of trichlorosilane and 30 ml of n-heptane was dropped from the dropping funnel over 45 minutes. Stirring was continued at 70°C for 6 hours. During this period, the reactants gave off a gas, which was found to contain ethyl chloride, ethylene, hydrogen, and ethane. The solid thus obtained was filtered off at 70°C and washed with five 300-ml portions of n-hexane at 65°C, followed by drying at 60°C for 30 minutes under reduced pressure. Thus there was obtained solid component (I).

Fifteen grams of solid component (I) was placed under the nitrogen gas atmosphere in a 300-ml stainless steel (SUS 316) balls, 12 mm in diameter. Then, 3.8 g of ethyl benzoate was added to the mill pot. The mill pot was vibrated on a vibrator for 1 hour to carry out contacting. Thus there was obtained solid component (II).

10.1 g of the solid component (II) was placed under the nitrogen gas atmosphere in a 200-ml glass reactor equipped with a stirrer. Then, 40 ml of toluene and 60 ml of titanium tetrachloride were added to the reactor, followed by stirring at 90°C for 2 hours. After removal of the supernatant liquid by decantation, 40 ml of toluene and 60 ml of titanium tetrachloride were added, followed by stirring at 90°C for 2 hours. After removal of the supernatant liquid by decantation, 40 ml of toluene and 60 ml of titanium tetrachloride were added, followed by stirring at 90°C for 2 hours. The resulting solid substance was filtered off at 90°C and washed with seven 100-ml portions of n-hexane at 65°C, followed by drying at 60°C for 30 minutes under reduced pressure. Thus there was obtained 7.0 g of catalyst component containing 3.0% of titanium.

Polymerization

Into a 3-liter autoclave, with the atmosphere replaced with nitrogen, were charged 12.5 mg of the catalyst component (A), 2.4 mmol of triethyl aluminum, and 0.24 mmol of phenyltriethoxysilane. Then, 1.5 liters of hydrogen gas and 2 liters of liquefied propylene were added. Homopolymerization of propylene was carried out with stirring at 70°C for 1 hour.

H.I. was 96.4%, which was measured by using polypropylene produced separately under the same condition.

After the polymerization was complete, unreacted propylene was discharged and the atmosphere in the autoclave was replaced with nitrogen. Into this autoclave were continuously introduced a mixture gas of ethylene and propylene [ethylene/propylene=1.5 (molar ratio)] so that the pressure of monomer gas was kept at 1.5 atm. Copolymerization was carried out at 70°C for 3 hours. After the polymerization was complete, unreacted mixture gas was discharged from the reaction system. Thus there was obtained 389 g of propylene block copolymer.

The ratio of copolymer in the total polymer was 16.5% (referred to as value C hereinafter), which was calculated from the consumption of the mixture gas and the quantity of total polymer. The content of

ethylene in the total polymer was 7.9%, which was obtained from IR analysis. This means that the ethylene content in the copolymer part is 48% (referred to as value G hereinafter).

The yield of propylene homopolymer (referred to as EH hereinafter) per gram of the catalyst component (A) was 26,000 g, which was calculated from the quantity of the total polymer and the consumption of the mixture gas. The yield of the copolymer part (referred to as EC hereinafter) was 5,140 g.

The resulting block copolymer had an MFR of 18 g/10 min and a bulk density of 0.39 g/cm$^3$. The polymer particles contained no agglomeration and no fouling occurred in the autoclave.

Example 2

Polymerization was carried out in the same way as in Example 1, except that the time for homopolymerization of propylene was changed to 0.5 hours. H.I. of the propylene homopolymer was 96.5%; value C was 24.9%; ethylene content in the total polymer was 12.4%; value G was 50%; and MFR was 13.5 g/10 min. EH was 14,500 g and EC was 4,800 g.

Example 3

Polymerization was carried out in the same way as in Example 1, except that the quantity of hydrogen added at the time of homopolymerization of propylene was changed to 200 ml. H.I. of the propylene homopolymer was 96.9%; value C was 22.9%; ethylene content in the total polymer was 11.4%; value G was 50%; and MFR was 1.9 g/10 min. EH was 16,400 g and EC was 4,870 g.

Examples 4 and 5

Polymerization was carried out in the same way as in Example 1, except that the quantity of phenyltriethoxysilane was changed to 0.48 mmol (Example 4) or 0.12 mmol (Example 5). The results are shown in Table 1.

TABLE 1

| Example | H.I of poly propylene (%) | EH (g/g-catalyst) | EC (g/g-catalyst) | Value C (%) | Value G (%) | MFR (g/10 min.) | Ethylene content in total polymer (%) |
|---|---|---|---|---|---|---|---|
| 4 | 96.8 | 24,000 | 4,600 | 16.1 | 47 | 18.5 | 7.6 |
| 5 | 95.5 | 29,000 | 6,200 | 17.6 | 52 | 21 | 9.2 |

Comparative Examples 1 and 2

Polymerization was carried out in the same way as in Example 1, except that phenyltriethoxysilane was replaced by 0.8 mmol and 0.24 mmol of ethyl p-anisate, respectively. The results are shown in Table 2. In Comparative Example 2, the polymer particles were poor in performance with severe agglomeration.

TABLE 2

| Comparative Example | H.I of poly propylene (%) | EH (g/g-catalyst) | EC (g/g-catalyst) | Value C (%) | Value G (%) | MFR (g/10 min.) | Ethylene content in total polymer (%) |
|---|---|---|---|---|---|---|---|
| 1 | 92.5 | 6,200 | 370 | 5.6 | 52 | 11.5 | 2.9 |
| 2 | 78.5 | 17,300 | 1,940 | 10.0 | 50 | 9.1 | 4.9 |

Examples 6 and 7

Polymerization was carried out in the same way as in Example 1, except that the molar ratio of ethylene and propylene in the mixture gas was changed to 3.5 and 0.64, respectively. The results are shown in Table 3.

TABLE 3

| Example | H.I of poly propylene (%) | EH (g/g-catalyst) | EC (g/g-catalyst) | Value C (%) | Value G (%) | MFR (g/10 min.) | Ethylene content in total polymer (%) |
|---|---|---|---|---|---|---|---|
| 6 | 96.3 | 25,400 | 6,900 | 21.4 | 69 | 12.4 | 14.8 |
| 7 | 96.4 | 25,500 | 3,850 | 13.1 | 31 | 26.4 | 4.1 |

Examples 8 and 9

Polymerization was carried out in the same way as in Example 1, except that phenyltriethoxysilane was replaced by 0.24 mmol of diphenyldimethoxysilane and 0.24 mmol of tetraethoxysilane, respectively. The results are shown in Table 4.

Examples 10 and 11

Polymerization was carried out in the same way as in Example 1, except that triethylaluminum (TEAL) was replaced by 2.4 mmol of a mixture of diethyl aluminum chloride (DEAC) and TEAL [DEAC/TEAL=1/4 (molar ratio)] and 2.4 mmol of triisobutyl aluminum, respectively. The results are shown in Table 4.

TABLE 4

| Example | H.I of poly propylene (%) | EH (g/g-catalyst) | EC (g/g-catalyst) | Value C (%) | Value G (%) | MFR (g/10 min.) | Ethylene content in total polymer (%) |
|---|---|---|---|---|---|---|---|
| 8 | 96.3 | 17,600 | 3,050 | 14.8 | 50 | 2.7 | 7.4 |
| 9 | 95.4 | 12,800 | 2,080 | 14.0 | 49 | 21.6 | 6.9 |
| 10 | 96.3 | 24,200 | 5,080 | 17.3 | 48 | 10.5 | 8.3 |
| 11 | 95.2 | 28,300 | 6,040 | 17.6 | 51 | 19.9 | 9.0 |

Example 12

Polymerization was carried out in the same way as in Example 1, except that phenyltriethoxysilane was replaced by 0.18 mmol of diphenyldimethoxysilane and 0.06 mmol of ethyl benzoate. H.I. of the propylene homopolymer was 97.5%; value C was 20.1%; ethylene content in the total polymer was 7.6%; value G was 47%; and MFR was 3.1 g/10 min. EH was 16,800 g and EC was 4,230 g.

Example 13

Preparation of catalyst component

Catalyst component (B) containing 3.0% of titanium was prepared in the same way as in Example 1, except that diisobutyl phthalate was replaced by the same quantity of ethyl benzoate.

Polymerization

Homopolymerization of propylene and copolymerization of ethylene and propylene were carried out in the same way as in Example 1, except that the polymerization catalyst used was one which is composed of 15.3 mg of catalyst component (B), 1.9 mmol of triethyl aluminum, and 0.19 mmol of phenyltriethoxysilane. The results are shown in Table 5.

Example 14

Preparation of catalyst component

Catalyst component (C) containing 5.0% of titanium was prepared in the same way as in Example 1, except that diisobutyl phthalate was replaced by the same quantity of phthalic anhydride.

Polymerization

Homopolymerization of propylene and copolymerization of ethylene and propylene were carried out in the same way as in Example 1, except that the polymerization catalyst used was one which is composed of 13.1 mg of catalyst component (C), 2.7 mmol of triethyl aluminum, and 0.27 mmol of phenyltriethoxysilane. The results are shown in Table 5.

Example 15

Preparation of catalyst component

Catalyst component (D) containing 3.5% of titanium was prepared in the same way as in Example 1, except that diisobutyl phthalate was replaced by the same quantity of di-n-butyl maleate.

Polymerization

Homopolymerization of propylene and copolymerization of ethylene and propylene were carried out in the same way as in Example 1, except that the polymerization catalyst used was one which is composed of 13.5 mg of catalyst component (D), 2.0 mmol of triethyl aluminum, and 0.2 mmol of phenyltriethoxysilane. The results are shown in Table 5.

Comparative Examples 3 and 4

Polymerization was carried out in the same way as in Example 13, except that phenyltriethoxysilane was replaced by ethyl p-anisate in an amount of 0.8 mmol and 0.24 mmol, respectively. The results are shown in Table 5. The polymer obtained in Comparative Example 4 caused agglomeration.

TABLE 5

| Example | H.I of poly propylene (%) | EH (g/g-catalyst) | EC (g/g-catalyst) | Value C (%) | Value G (%) | MFR (g/10 min.) | Ethylene content in total polymer (%) |
|---|---|---|---|---|---|---|---|
| 13 | 95.5 | 18,900 | 3,150 | 14.3 | 49 | 8.9 | 7.0 |
| 14 | 96.0 | 21,200 | 4,000 | 15.9 | 50 | 11.0 | 8.0 |
| 15 | 95.9 | 22,700 | 3,630 | 13.8 | 52 | 10.9 | 7.2 |
| 3* | 95.2 | 16,500 | 550 | 3.2 | 53 | 2.5 | 1.7 |
| 4* | 81.3 | 23,300 | 2,020 | 8.0 | 49 | 3.8 | 3.9 |

*Comparative Example

Example 16

Example 1 was repeated, except that 0.5 g of ethylene was forced into the autoclave six times at intervals of 10 minutes during the homopolymerization of propylene, whereby random copolymerization of ethylene and propylene was carried out. The results are shown in Table 6.

Example 17

Example 1 was repeated, except that before the addition of hydrogen gas during the homopolymerization of propylene, 15 g of 1-butene was added for random copolymerization of propylene and 1-butene. The results are shown in Table 6.

Example 18

Example 1 was repeated, except that the ethylene/propylene mixture gas used in the copolymerization of ethylene and propylene was replaced by a mixture gas composed of ethylene/propylene/1 - butene at a molar ratio of 1.78/1/0.165. The results are shown in Table 6.

TABLE 6

| Example | H.I of poly propylene (%) | EH (g/g-catalyst) | EC (g/g-catalyst) | Value C (%) | Value G (%) | MFR (g/10 min.) | Ethylene content in total polymer (%) |
|---|---|---|---|---|---|---|---|
| 16 | 95.0 | 27,800 | 5,210 | 15.8 | 49 | 17.3 | 7.7 |
| 17 | 95.7 | 25,400 | 5,040 | 16.6 | 47 | 19.2 | 7.8 |
| 18 | 96.4 | 25,700 | 4,980 | 16.2 | 49 | 17.8 | 7.9 |

Note:

(1) The content of comonomer (ethylene 0.6% in Example 16 and 1-butene 1.9% in Example 17) in the random copolymer obtained in the first step was measured by using the sample produced under the same conditions for the measurement of H.I.

(2) In Example 18, the ratio of ethylene/propylene/1-butene in the terpolymer obtained in the second step was 49/42/9 (%) according to the calculations performed on the basis of the content of ethylene and 1-butene in the total polymer.

The block copolymers can be moulded with a short cycle time at relatively low molding temperature and/or pressure.

**Claims**

1. A process for producing propylene block copolymers which comprises the steps of:

(a) polymerizing propylene in the presence of a catalyst to give a crystalline propylene polymer,

(b) copolymerizing ethylene and at least one alpha-olefin in the presence of said catalyst and said crystalline polypropylene polymer, said catalyst comprising

(A) a titanium-containing catalyst component obtained by contacting with one another

(1) a magnesium alkoxide,

(2) a silane having at least one hydrogen-silicon bond, and

(3) an electron donor compound, and

(4) a titanium compound,

(B) an organic compound of a metal of Groups I to III of the Periodic Table, and

(C) an organo silicon compound represented by the formula $R_pSiX_m(OR')_n$ wherein R and R' are the same or different $C_{1-20}$ hydrocarbon groups, X is a halogen atom, $0 \leq p < 4$, $0 \leq m < 4$, $0 < n \leq 4$, and $p+m+n=4$.

2. The process of claim 1 wherein the magnesium alkoxide and the silicon compound having the hydrogen-silicon bond are reacted together prior to contact with the electron donor and the titanium compound.

3. The process of claim 2 wherein the silicon compound having the hydrogen-silicon bond is trichlorosilane and the magnesium compound is magnesium diethoxide.

4. The process of any of claims 1 to 3, wherein the organic compound is an organoaluminum compound represented by the formula $R_wAlX'''_{3-w}$ wherein $R_w$ is an alkyl or aryl group, X''' is a halogen atom, alkoxyl group, or hydrogen atom and w is any number in the range of $1 \leq w \leq 3$.

5. The process of claim 4 wherein the organoaluminum compound is an aluminum trialkyl.

6. The process of claim 5 wherein the aluminum trialkyl is one of triethyl aluminum or triisobutyl aluminum.

7. The process of claim 1 wherein the organo silicon compound is selected from ethyl triethoxy silane, vinyl triethoxy silane, phenyl trimethoxy silane, phenyl triethoxy silane, diphenyl dimethoxy silane, methyl phenyl dimethoxy silane and chlorophenyl diethoxy silane.

8. The process of claim 1 wherein the electron donor is selected from carboxylic acids, carboxylic acid anhydrides, carboxylate esters, carboxylic acid halides, alcohols, ethers, ketones, amines, amides, nitriles, aldehydes, alcoholates, phosphoamides, thioethers, thioesters, carbonate esters and compounds of phosphorus, arsenic or antimony attached to an organic group through a carbon or oxygen atom.

9. The process of claim 8 wherein the electron donor is ethyl benzoate.

10. The process of claim 3 wherein the titanium compound is $TiCl_4$.

**Patentansprüche**

1. Verfahren zur Herstellung von Propylen - Blockcopolymeren, bei dem man:

(a) Propylen in Gegenwart eines Katalysators polymerisiert, um ein kristallines Propylenpolymer zu erhalten,

(b) Ethylen und mindestens ein alpha-Olefin in Gegenwart des Katalysators und des kristallinen Polypropylenpolymers copolymerisiert, wobei der Katalysator enthält

(A) eine titanhaltige Katalysatorkomponente, die man durch Inkontaktbringen der folgenden Komponenten erhält:

(1) ein Magnesiumalkoxid,

(2) ein Silan mit mindestens einer Wasserstoff-Siliciumbindung, und

(3) einer Elektronendonorverbindung, und

(4) einer Titanverbindung,

(B) eine organische Verbindung eines Metalls der Gruppe I bis III des periodischen Systems, und

(C) eine Organosiliciumverbindung, entsprechend der Formel $R_pSiX_m(OR')_n$, worin R und R' gleiche oder verschiedene $C_{1-20}$ Kohlenwasserstoffgruppen bedeuten, X ein Halogenatom ist, $0 \leq p < 4$, $0 \leq m < 4$, $0 < n \leq 4$ und $p+m+n=4$.

2. Verfahren nach Anspruch 1, worin das Magnesiumalkoxid und die Siliciumverbindung, die die

Wasserstoff - Siliciumbindung besitzt, vor Kontakt mit der Elektronendonor- und der Titanverbindung miteinander umgesetzt werden.

3. Verfahren nach Anspruch 2, worin die Siliciumverbindung mit der Wasserstoff - Siliciumverbindung Trichlorsilan ist und die Magnesiumverbindung Magnesiumdiethoxid ist.

4. Verfahren nach einem der Ansprüche 1 bis 3, worin die organische Verbindung eine Organoaluminiumverbindung, entsprechend der Formel $R_wAlX'''_{3-w}$ ist, worin $R_w$ eine Alkyl- oder Arylgruppe bedeutet, X''' ein Halogenatom, Alkoxylgruppe oder Wasserstoffatom ist und w eine Zahl im Bereich von $1 \leq w \leq 3$.

5. Verfahren nach Anspruch 4, worin die Organoaluminiumverbindung Aluminiumtrialkyl ist.

6. Verfahren nach Anspruch 5, worin das Aluminiumtrialkyl eine von Triethylaluminium oder Triisobutylaluminium ist.

7. Verfahren nach Anspruch 1, worin die Organosiliciumverbindung ausgewählt ist aus Ethyltriethoxysilan, Vinyltriethoxysilan, Phenyltrimethoxysilan, Phenyltriethoxysilan, Diphenyldimethoxysilan, Methylphenyldimethoxysilan und Chlorphenyldiethoxysilan.

8. Verfahren nach Anspruch 1, worin der Elektronendonor ausgewählt ist aus Carbonsäuren, Carbonsäureanhydriden, Carboxilatestern, Carbonsäurehalogeniden, Alkoholen, Ethern, Ketonen, Aminen, Amiden, Nitrilen, Aldehyden, Alkoholaten, Phosphoramiden, Thioethern, Thioestern, Carbonatestern und Verbindungen des Phosphors, Arsens oder Antimons, die an eine organische Gruppe über ein Kohlenstoff- oder Sauerstoffatom gebunden sind.

9. Verfahren nach Anspruch 8, worin der Elektronendonor Ethylbenzoat ist.

10. Verfahren nach Anspruch 3, worin die Titanverbindung $TiCl_4$ ist.

**Revendications**

1. Procédé de production des copolymères séquencés de propylène, qui comprend les étapes consistant:

(a) à polymériser du propylène en présence d'un catalyseur pour former un polymère de propylène cristallin,

(b) à copolymériser de l'éthylène et au moins une alpha-oléfine en présence dudit catalyseur et dudit polymère de propylène cristallin, ledit catalyseur comprenant

(A) un composant catalyseur contenant du titane obtenu par mise en contact, les uns avec les autres

(1) d'un alcoolate de magnésium,

(2) d'un silane ayant au moins une liaison hydrogène-silicium, et

(3) d'un composé donneur d'électrons, et

(4) d'un composé de titane,

(B) un composé organique d'un métal des Groupes I à III du Tableau Périodique, et

(C) un composé organique de silicium représenté par la formule $R_pSiX_m(OR')_n$ dans laquelle R et R' sont des groupes hydrocarbonés en $C_1$ à $C_{20}$ identiques ou différents, X est un atome d'halogène, p va d'une valeur supérieure ou égale à 0 à une valeur inférieure à 4, m va d'une valeur supérieure ou égale à 0 à une valeur inférieure à 4, n va d'une valeur inférieure à 0 à une valeur inférieure ou égale à 4 et la somme $p+m+n$ est égale à 4.

2. Procédé suivant la revendication 1, dans lequel l'alcoolate de magnésium et le composé de silicium ayant une liaison hydrogène-silicium sont amenés à réagir ensemble avant la mise en contact avec le donneur d'électrons et le composé de titane.

3. Procédé suivant la revendication 2, dans lequel le composé de silicium ayant une liaison hydrogène-silicium est le trichlorosilane et le composé de magnésium est le diéthylate de magnésium.

4. Procédé suivant l'une quelconque des revendications 1 à 3, dans lequel le composé organique est un composé organique d'aluminium représenté par la formule $R_wAlX'''_{3-w}$ dans laquelle $R_w$ est un groupe alkyle ou aryle, X''' est un atome d'halogène, un groupe alkoxyle ou un atome d'hydrogène et w représente n'importe quel nombre dans la plage allant d'une valeur supérieure ou égale à 1 à une valeur inférieure ou égale à 3.

5. Procédé suivant la revendication 4, dans lequel le composé organique d'aluminium est un aluminiumtrialkyle.

6. Procédé suivant la revendication 5, dans lequel l'aluminium-trialkyle est le triéthylaluminium ou le triisobutylaluminium.

7. Procédé suivant la revendication 1, dans lequel le composé organique de silicium est choisi entre l'éthyltriéthoxysilane, le vinyltriéthoxysilane, le phényltriméthoxysilane, le phényltriéthoxysilane, le diphényldiméthoxysilane, le méthylphényldiméthoxysilane et le chlorophényldiéthoxysilane.

8. Procédé suivant la revendication 1, dans lequel le donneur d'électrons est choisi entre des acides carboxyliques, des anhydrides d'acides carboxyliques, des esters carboxyliques, des halogénures d'acides carboxyliques, des alcools, des éthers, des cétones, des amines, des amides, des nitriles, des aldéhydes, des alcoolates, des phospho-amides, des thioéthers, des thioesters, des esters carboniques et des composés de phosphore, d'arsenic ou d'antimoine attachés à un groupe organique par l'intermédiaire d'un atome de carbone ou d'oxygène.

9. Procédé suivant la revendication 8, dans lequel le donneur d'électrons est le benzoate d'éthyle.

10. Procédé suivant la revendication 3, dans lequel le composé de titane est $TiCl_4$.